# EUROPÄISCHE PATENTANMELDUNG

(11) **EP 4 474 261 A1**
(43) Veröffentlichungstag der Anmeldung: **11.12.2024**
(21) Anmeldenummer: 24170467.5
(22) Anmeldetag: 16.04.2024
(51) Int. Cl.: B62J 45/413, B62J 45/423, B62K 25/02, G01P 3/481, G01P 3/487, G01P 3/488, G01D 5/20

(54) **SYSTEM ZUR BESTIMMUNG DER GESCHWINDIGKEIT EINES FAHRZEUGS**

(30) Priorität: 06.06.2023 EP 23177580
(71) Anmelder: Hochschorner Holding GmbH, 82152 Krailling (DE)
(72) Erfinder: BECKER, Christian, 82205 Gilching (DE); JAHNEN, Georg, 85716 Unterschleißheim (DE)
(74) Vertreter: Wunderlich & Heim Patentanwälte PartG mbB

(57) **Zusammenfassung**

System zur Bestimmung der Geschwindigkeit eines Fahrzeugs auf Basis einer Umdrehungsmessung eines Rades des Fahrzeugs, wobei das Rad eine an einem Rahmen (11) des Fahrzeugs fixierbare Radachse und eine daran drehbare Nabe (21) und vorzugsweise eine mit der Nabe (21) fest verbundene Bremsscheibe (23) aufweist. Das System umfasst ein Pulsrad (1), das im Einbauzustand drehfest zur Nabe (21) angebracht ist, und eine dem Pulsrad (1) im Einbauzustand zugeordnete Messeinrichtung (40) zum Ermitteln der Umdrehungen des Pulsrades (1). Das Pulsrad (1) weist zwei unterschiedliche Materialen (31,32) auf, wobei ein erstes Material (31) ausgelegt ist, um keinen Einfluss auf die Messeinrichtung (40) auszuüben, und wobei ein zweites Material (32) ein elektrisch leitfähiges Material ist, um Einfluss auf die Messeinrichtung (40) auszuüben. Das Pulsrad (1) ist rad- oder scheibenartig, mit einer Breite (d), einem Radius (r) und einem Umfang (U), ausgebildet, wobei auf dem Umfang (U) Bereiche mit dem ersten Material (31) und Bereiche mit dem zweiten Material (32) jeweils alternierend zueinander angeordnet sind. Die Messeinrichtung (40) weist einen Oszillator, der einen Schwingkreis (44) mit einer Spule und einem Kondensator anregt, dessen Schwingkreisamplitude durch die Bewegung des zweiten Materials (32) in das elektromagnetische Wechselfeld der Spule gedämpft wird, und eine Auswertungsschaltung (411) auf, die konfiguriert ist, um die dadurch erzeugte Änderung der Schwingungsamplitude des Spannung des Schwingkreises auszuwerten und die Umdrehungen des Pulsrades (1) zu ermitteln.

## Beschreibung

Die Erfindung betrifft ein System zur Bestimmung der Geschwindigkeit eines Fahrzeugs, insbesondere eines fakultativ elektromotorisch angetriebenen Fahrzeugs wie ein Fahrrad, Scooter, Rollstuhl, Roller oder dgl., auf Basis einer Umdrehungs- oder Rotationsmessung eines Rades des Fahrzeugs.

Derartige Systeme sind bekannt und umfassen ein Pulsrad, das mit einem Rad des Fahrzeugs gekoppelt ist und mit diesem ko-rotiert, sowie einen Geschwindigkeitssensor (Messeinrichtung), der (die) dem Pulsrad zugeordnet ist und dessen Rotation erfasst. Das Rad umfasst eine am Fahrzeugrahmen fixierbare Radachse und eine daran drehbare Nabe mit daran fixierten Radspeichen oder einer Scheibe und häufig eine mit der Nabe fest verbundene Bremsscheibe. Das Pulsrad ist - im angebauten Zustand - dann in der Regel zwischen der Bremsscheibe und dem Fahrzeugrahmen drehfest zur Nabe angebracht.

Bei den gängigsten Verfahren zum Ermitteln der Geschwindigkeit eines Fahrzeugs, insbesondere Fahrrades oder dgl. wird ein kleiner Magnet an den Speichen des Rads befestigt. Der Magnet befindet sich normalerweise in der Nähe der Nabe, und ist so platziert, dass er sich bei jeder Umdrehung des Rads an einem Sensor vorbeibewegt. Der Sensor wird am Rahmen oder an der Gabel des Fahrzeugs montiert und erfasst das Passieren des Magneten.

Der Geschwindigkeitssensor weist einen stationären magnetischen Sensor, insbesondere Hall-Sensor oder Hall-Effekt-Sensor auf, der das Magnetfeld bzw. die magnetische Flussdichte erkennt, wenn der Magnet sich daran vorbeibewegt. Jedes Mal, wenn der Magnet den Sensor passiert, wird ein elektrisches Signal erzeugt. Dieses Signal wird dann an eine Auswertungsschaltung in einem Fahrradcomputer oder im Geschwindigkeitssensor selbst gesendet.

Der Fahrradcomputer oder der Geschwindigkeitssensor zählt die Anzahl der Signale, die der Sensor in einem bestimmten Zeitintervall generiert. Durch die Kombination der Anzahl der Signale mit dem bekannten Umfang des Rads kann die gefahrene Strecke und in Bezug zu der Zeit auch die Geschwindigkeit berechnet werden. Einige Fahrradcomputer zeigen die Geschwindigkeit kontinuierlich an, während andere die Geschwindigkeit in regelmäßigen Intervallen aktualisieren.

Es ist wichtig, dass der Sensor richtig ausgerichtet und der Abstand zwischen dem Magnet und dem Sensor angemessen ist, um zuverlässige Ergebnisse zu erzielen. Ein zu großer Abstand oder eine falsche Ausrichtung kann zu ungenauen Messungen führen.

Gerade im Bereich von Elektrofahrrädern wird mittlerweile davon abgewichen, lediglich einen einzelnen Magneten zur Detektion einer Umdrehung des Rades zu verwenden, da aufgrund gesetzlicher Vorgaben zur Motorunterstützung eine höhere Genauigkeit und Manipulationssicherheit zur Geschwindigkeitsermittlung eingefordert wird. Aus diesem Grund werden Pulsräder eingesetzt, welche mehrere Magnete enthalten und zusammen mit entsprechenden Sensoren derart ausgebildet sind, dass sie mehrere Impulse pro Umdrehung des Rades erzeugen. Allerdings sind Magnete, zumal in höherer Stückzahl, relativ teuer.

Außerdem besitzen Systeme mit einer geringen Anzahl von Magneten speziell beim Einsatz bei Elektrofahrrädern das Problem, dass eine sehr langsame Schiebegeschwindigkeit bei kurzen Schiebestrecken, zum Beispiel beim Manövrieren des Fahrrads von Hand, nur ungenau oder mit Verzögerung erfasst werden kann, so dass eine darauf angewiesene Schiebeunterstützung des Elektromotors nicht zuverlässig aktiviert werden kann.

Ferner ist zu berücksichtigen, dass gerade bei Straßenfahrrädern und insbesondere bei Rennrädern nur ein sehr geringer Montageraum und eine geringe Einbaubreite sowie -höhe zur Verfügung stehen, um das Pulsrad und die zugehörige Auswerte- oder Messeinrichtung anzubringen. Es ist auch zu beachten, dass das Rad selbst oft mittels einer Schnellbefestigung entfernt werden können soll.

Aus der US 3 317 829 A ist eine Anordnung zum Umwandeln einer Drehgeschwindigkeit in eine elektrische Spannung oder einen elektrischen Strom bekannt, die ein Impulsrad aufweist, das drehbar ist und das mit seinem Umfang einem stationären Hall-Sensor gegenüberliegt. Das Impulsrad besteht aus einem nicht-magnetisierbaren Material wie Aluminium, Messing oder einem Isoliermaterial und hat eine Anzahl von beispielsweise 100 kleinen Permanentmagneten oder Elementen aus magnetisierbarem Material, die um den Umfang des Rades regelmäßig verteilt und in dieses eingebettet sind. Das drehende Impulsrad erzeugt in dem Hall-Sensor eine Spannung mit einer zur Drehgeschwindigkeit und Anzahl der Magnete proportionalen Frequenz.

Aus der US 3 716 787 A ist ein Bewegungsdetektorsystem unter Verwendung eines Impulstachometers bekannt, das ein Rad aus nichtmagnetischem, nichtleitendem Material, wie z.B. Fasern oder Teflon, mit einer Vielzahl von gleichmäßig beabstandeten, magnetisch getrennten Stiften in der Peripherie aufweist, die sich in die Nähe einer Aufnahmespule eines abgestimmten Schaltkreises bewegen, um die Impedanz in diesem zu verändern. Die Veränderung der Impedanz bewirkt eine Phasenverschiebung des Schaltkreises, die mit einer vorbestimmten Referenzphase von Spannung und Strom in dem Schaltkreis verglichen wird, um einen Hinweis auf eine Bewegung des Rades und eine Messung der Geschwindigkeit der Bewegung in einem gemessenen Zeitintervall zu liefern.

Aus der FR 2 583 514 A1 ist eine Anordnung zur Messung von Drehbewegungen bekannt, die aus einem beweglichen Element, das mit einem drehbaren Teil verbunden ist, und einem feststehenden Hall-Sensor besteht. Der Hall-Sensor liefert ein elektrisches Signal, das von einem Magnetfeld abhängt, das von magnetisierten oder magnetischen Zonen erzeugt oder gestört wird, die zwischen unmagnetischen oder sehr schwach magnetischen Bereichen eingefügt sind, die gegenüber dem Sensor auf einer Oberfläche des beweglichen Elements angeordnet sind. Die magnetisierten oder magnetischen Bereiche sind durch Einspritzen eines mit magnetisierbaren Partikeln beladenen Kunststoffmaterials in zuvor in das bewegliche Element eingebrachte Aufnahmen oder Kerben hergestellt.

Die EP 3 178 733 A1 offenbart eine Radeinheit für ein Fahrrad umfassend eine Nabe und eine Felge, welche um eine Drehachse drehbar beweglich angeordnet ist, wobei die Nabe und die Felge durch Speichen miteinander verbunden sind. An der Nabe sind eine Bremsscheibe und ein Sensorkranz, welcher einen Abtastbereich mit einer in Umlaufrichtung periodisch variierenden, drehsymmetrischen gezahnten Struktur umfasst, welche eine magnetfeldbeeinflussende Wirkung hat, die mit einem dem Abtastbereich zugewandten Hall-Sensor detektierbar ist, so angeordnet, dass der Abtastbereich zwischen der Bremsscheibe und den Speichen positioniert ist. Der Sensorkranz ist dabei über Haltestege ähnlich den Tragstegen einer Bremsscheibe mit 6 Bolzen an der Nabe befestigt. Die Drehgeschwindigkeit wird aus der zeitlichen Veränderung der magnetfeldbeeinflussenden Wirkung ermittelt.

Der Erfindung liegt daher die **Aufgabe** zugrunde, ein System zur Bestimmung der Geschwindigkeit eines Fahrzeugs, insbesondere eines elektromotorisch angetriebenen Fahrzeugs wie ein Fahrrad, Scooter, Rollstuhl, Roller oder dgl. anzugeben, welches kostengünstig ist und auch geringe Geschwindigkeiten genau erfassen kann. Zudem soll ein Pulsrad des Systems platzsparend anbringbar sein und eine platzsparende Montage einer Messeinrichtung ermöglichen. Ein weiterer Aspekt ist die Möglichkeit, das System ohne größere strukturelle Modifikationen in bestehende Fahrzeugkonzepte zu integrieren.

Diese Aufgabe wird erfindungsgemäß durch ein System zur Bestimmung der Geschwindigkeit eines Fahrzeugs mit den Merkmalen des Anspruchs 1 gelöst.

Weitere vorteilhafte Ausführungsformen sind in den abhängigen Ansprüchen, der Beschreibung sowie in den Figuren und deren Beschreibung angegeben.

Entsprechend Anspruch 1 betrifft die Erfindung ein System zur Bestimmung der Geschwindigkeit eines Fahrzeugs auf Basis einer Umdrehungsmessung eines Rades des Fahrzeugs, wobei das Rad eine an einem Rahmen des Fahrzeugs fixierbare Radachse und eine daran drehbare Nabe und vorzugsweise eine mit der Nabe fest verbundene Bremsscheibe aufweist. Das System umfasst ein Pulsrad, das im Einbauzustand drehfest zur Nabe angebracht bzw. anzubringen ist, und eine dem Pulsrad im Einbauzustand zugeordnete Messeinrichtung zum Ermitteln der Umdrehungen des Pulsrades. Das Pulsrad weist zwei unterschiedliche Materialen auf, wobei ein erstes Material ausgelegt ist, um keinen Einfluss auf die Messeinrichtung auszuüben, und wobei ein zweites Material ein elektrisch leitfähiges Material ist, um Einfluss auf die Messeinrichtung auszuüben. Das Pulsrad ist rad- oder scheibenartig, mit einer Breite, einem Radius und einem Umfang, ausgebildet, wobei auf dem Umfang Bereiche mit dem ersten Material und Bereiche mit dem zweiten Material jeweils alternierend zueinander angeordnet sind. Die Messeinrichtung umfasst einen Oszillator, der einen Schwingkreis mit einer Spule und einem Kondensator anregt, dessen Schwingkreisamplitude durch die Bewegung des zweiten Materials in das elektromagnetische Wechselfeld der Spule gedämpft wird, und eine Auswertungsschaltung auf, die konfiguriert ist, um die dadurch erzeugte Änderung der Schwingungsamplitude der Spannung des Schwingkreises auszuwerten und die Umdrehungen des Pulsrades zu ermitteln.

Umfang kann in diesem Zusammenhang auch als radial nach außen gewandte Umfangsfläche verstanden werden, die durch den geometrischen Umfang und die Breite des Pulsrades definiert ist.

Das erfindungsgemäße System ermöglicht eine Ermittlung der Geschwindigkeit des Rades des Fahrzeugs mittelbar über die Erfassung der Umdrehungen des damit - im Einbauzustand - ko-rotierenden Pulsrades mit hoher Auflösung, auch bei niedrigen Geschwindigkeiten und mit geringen Kosten in der Umsetzung.

Das Vorsehen von zwei unterschiedlichen Materialien bietet den Vorteil, dass gezielt Impulse in der Messeinrichtung erzeugt beziehungsweise von dieser gemessen werden können. Hierdurch kann die Anzahl der Signaländerungen bei einer Umdrehung das Rades und damit des Pulsrades festgelegt werden. Dies beeinflusst die Auflösung der Messeinrichtung.

Vorteilhaft ist es, wenn als erstes Material ein elektrisch nicht leitfähiges Material verwendet wird, welches bei der eingesetzten Messeinrichtung, die einen Schwingkreis aufweist, keine oder keine wesentliche Signalveränderungen auslöst. Insbesondere ist es vorteilhaft, wenn ein elektrisch nicht-leitender Kunststoff verwendet wird. Grundsätzlich sind jedoch auch andere Materialien geeignet, die auf gängige Messeinrichtungen, die auf magnetischen, elektromagnetischen oder elektrischen Feldtechnologien basieren, keinen Einfluss haben.

Als zweites Material wird erfindungsgemäß ein elektrisch leitfähiges Material verwendet, welches auch ferromagnetisch ausgebildet sein kann. Es kann sich beispielsweise um ein metallisches Material oder einen leitenden Kunststoff handeln. Dies bietet sich insbesondere an, da die Messeinrichtung in Verbindung mit dem Schwingkreis arbeitet, der durch das metallische Material beeinflusst wird. Die Verwendung des kostengünstigen elektrisch leitfähigen Materials erlaubt, in Verbindung mit der erfindungsgemäßen, ebenfalls kostengünstig herstellbaren Messeinrichtung, die auf einem Schwingkreis basiert, dessen Dämpfung durch die Beeinflussung durch dieses Material im Wechsel mit dem ersten Material ausgewertet wird, den Verzicht auf teure Permanentmagnete im Pulsrad, was wirtschaftlich besonders relevant ist, wenn die Anzahl der Bereiche mit dem zweiten Material zur Steigerung der Auflösung erhöht wird.

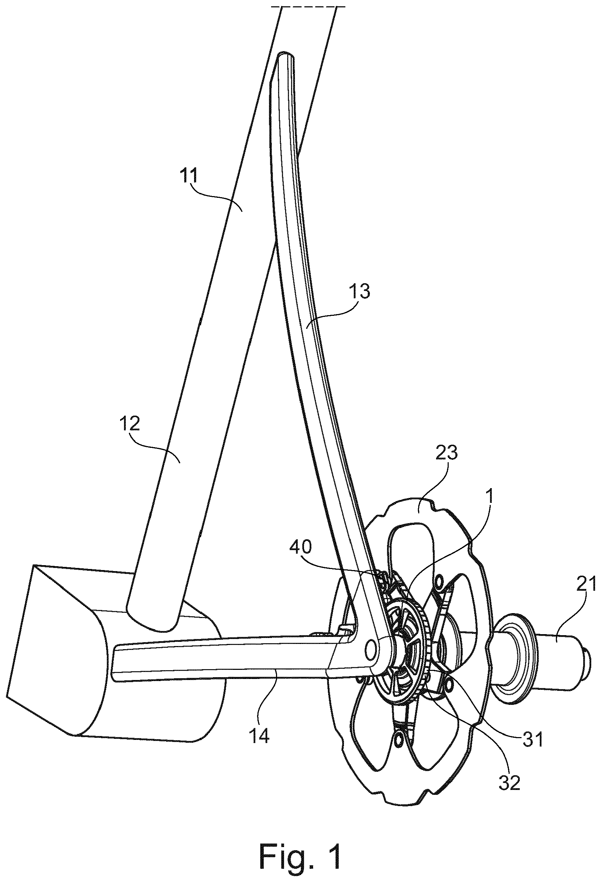

Entsprechend der Erfindung wurde außerdem erkannt, dass es gerade im Hinblick auf eine platzsparende Montage der Messeinrichtung vorteilhaft ist, eine Auswertung, Signalermittlung oder -erzeugung, nicht über den Radius beziehungsweise die Seitenfläche des Pulsrades durchzuführen, sondern über den radial nach Außen gewandten Umfangsbereich. Hierdurch wird, wie insbesondere in Fig. 1 sichtbar ist, eine Montage der Messeinrichtung möglich, die nicht ebenfalls entlang der Achse des Rades ausgerichtet ist. Mit dem erfindungsgemäßen Pulsrad kann die Messeinrichtung radial zum Pulsrad, also in derselben Ebene, platziert werden. Dies verringert den Platzbedarf in axialer Richtung der Nabe deutlich.

Daneben ist durch die drehfeste Kopplung des Pulsrades mit der Nabe das Risiko verringert, dass durch unbeabsichtigten Kontakt mit dem beispielsweise im Stand der Technik verwendeten Speichenmagneten, der mechanisch nicht sehr stabil an den Speichen eines Rades befestigt wird, derselbe aus dem Erfassungsbereich der Messeinrichtung kommt und die Geschwindigkeitsmessung unterbrochen ist. Die Verwendung des Pulsrades erlaubt zudem eine von der konkreten Speichenform und Ausrichtung unabhängige und sichere drehfeste Anbringung an der Nabe, beispielsweise über die vereinheitlichten Befestigungen der Bremsscheibe.

Das Vorsehen von zwei unterschiedlichen und nicht sehr teuren Materialien bietet außerdem den Vorteil, dass gezielt eine höhere Anzahl an Impulsen in der Messeinrichtung erzeugt beziehungsweise von dieser gemessen werden können. Hierdurch kann die Anzahl der Signaländerungen bei einer Umdrehung das Rades und damit des Pulsrades festgelegt werden. Dies verbessert die Auflösung der Messeinrichtung.

Es hat sich als vorteilhaft herausgestellt, dass die Bereiche mit dem ersten Material und die Bereiche mit dem zweiten Material auf dem Umfang des Pulsrades im Wesentlichen jeweils gleich groß ausgebildet sind. Generell ist dies jedoch nicht erforderlich. Die exakte Ausbildung hängt insbesondere vom gewählten Detektionsprinzip der Messeinrichtung und deren Detektionssensibilität ab.

Besonders gute Ergebnisse zur Detektion wurde erreicht, wenn die Bereiche mit dem ersten Material und die Bereiche mit dem zweiten Material auf dem Umfang des Pulsrades im Wesentlichen gleich bzw. regelmäßig verteilt sind. Anders ausgedrückt kann ein regelmäßiger Wechsel zwischen den beiden Materialien stattfinden. Es ist jedoch auch denkbar, die Materialien bewusst ungleichmäßig bzw. unregelmäßig auf dem Umgang des Pulsrades vorzusehen, um zusätzliche Informationen zur Rotation, konkret die Rotationsrichtung zu ermitteln. So kann beispielsweise ein sich wiederholendes Signalmuster aufgeprägt werden. Dies kann insbesondere vorteilhaft sein, um Manipulationen festzustellen, da die so empfangenen manipulierten Signale dann unter Umständen abweichend zu den ursprünglich ausgeprägten Signalen sind.

Für eine hochgenaue Auflösung hat es sich als besonders praktikabel herausgestellt, dass auf dem Umfang des Pulsrades mindestens je 20 Bereiche mit dem ersten und je 20 Bereiche mit dem zweiten Material vorgesehen sein sollten. Hierdurch wird eine im Vergleich zu einem klassischen Sensor sehr hohe Auflösung ermöglicht. Die Anzahl der Bereich wird durch die Anwendung vorgegeben. Um beispielsweise eine Messung für eine Schiebehilfe eines E-Bikes oder Pedelecs durchzuführen sind erfahrungsgemäß bereits je 20 Bereiche ausreichend. Zur Steuerung bestimmter Fahrparameter sollten es jedoch mindestens 40 jeder Art sein.

In einer bevorzugten Ausführungsform besteht das Pulsrad, insbesondere ein radial innerer Bereich innerhalb des Außenumfangs, der den Erfassungsbereich trägt und zur Befestigung an der Nabe dient (Hauptkörper des Pulsrades), hauptsächlich aus dem ersten Material, welches keinen Einfluss auf die Mess- oder Detektionseinrichtung hat. Auf diese Weise wird von herkömmlichen Pulsrädern abgewichen, die meist aus einem Material mit Luftspalten ausgebildet sind. Hierzu wird betont, dass es sich bei dem zweiten Material nicht um Luft, sondern um ein festes, elektrisch leitfähiges Material handelt. Durch das Vorsehen des Hauptkörpers des Pulsrades aus dem ersten Material, welches keine Signale in der Detektionseinrichtung erzeugt, kann durch das gezielte Aufbringen des zweiten Materials ein deutliches und klares Signal erzeugt werden, welches wiederum die Detektionseigenschaften deutlich verbessert.

Der Hauptkörper des Pulsrades kann beispielsweise durch ein Spritzgussverfahren hergestellt werden. Grundsätzlich sind jedoch auch andere Herstellungsverfahren, die sich beispielsweise für Kunststoff eignen, möglich. Auf dem Umfang des Hauptkörper des Pulsrades können Bereiche, insbesondere Vertiefungen, für das zweite Material vorgesehen sein. In diese Vertiefungen kann das zweite Material dann eingelegt, insbesondere eingeklebt, werden. Es ist jedoch auch ein formschlüssiger Presssitz oder dergleichen möglich.

Allgemein kann das Pulsrad in Form einer, insbesondere breiteren Scheibe, ausgebildet sein. In ähnlicher Weise ist es auch möglich, das Pulsrad selbst radähnlich auszuführen, mit einer Verstärkung im Umfangsbereich sowie speichenartigen Verlängerungen in Richtung des Zentrums des Pulsrades. Grundsätzlich sollte das Gewicht des Pulsrades möglichst gering sein, um keinen oder einen zu vernachlässigenden Einfluss auf die Rotation des Rades auszuüben.

Die Größe des Pulsrades kann prinzipiell beliebig sein. Vorteilhaft ist es jedoch, wenn das Pulsrad einen Durchmesser aufweist, der mindestens doppelt so groß wie der Durchmesser der Nabe ist. Als maximale Größe ist es bevorzugt, wenn der Durchmesser des Pulsrades kleiner, insbesondere halb so klein wie der Durchmesser der an der Nabe ebenfalls vorgesehen Bremsscheibe ist. Der Durchmesser des Pulsrades kann so beispielsweise zwischen 20 mm und 70 mm liegen.

Eine derartige Dimension hat sich als effizienter Mittelwert herausgestellt, da, je größer das Pulsrad ist, eine desto bessere Auflösung der Signale vorliegt, jedoch auch mehr Platz beansprucht wird. Insbesondere das Ausbilden das Pulsrades kleiner als die Bremsscheibe ermöglicht es, dass das Pulsrad sowie die darauf abgestimmte Messoder Detektionseinrichtung nicht mit der Bremsscheibe und mit dem Bremssattel platzmäßig konkurriert, so dass ausreichend hohe Freiheitsgrade zum Einbau des Pulsrades vorhanden sind.

Grundsätzlich kann das Pulsrad beliebig direkt oder indirekt drehfest an der Nabe befestigt werden. Eine einfache Befestigungsmöglichkeit ist es, wenn das Pulsrad ausgebildet ist, um an der Bremsscheibe oder an einer Befestigung der Bremsscheibe (einem Verschluss- oder Lockring) befestigt zu werden. Gängige Bremsscheiben weisen standardmäßig Befestigungsmöglichkeiten auf. Diese können hierfür verwendet werden. Dabei handelt es sich beispielsweise um eine internal Centerlock-, external Centerlock- oder 6-Bolt-Befestigung.

Vorzugsweise ist daher das Pulsrad ausgebildet, um indirekt drehfest an der Nabe durch formschlüssigen Eingriff mit einer Verzahnung einer internal Centerlock-Befestigung oder einer external Centerlock-Befestigung eines Verschluss- oder Lockrings der Bremsscheibe befestigt zu werden, so dass das Pulsrad im angebauten Zustand zwischen der Bremsscheibe und dem Fahrradrahmen drehfest zur Nabe angebracht ist.

In einer nicht gezeigten Variante kann das Pulsrad ausgebildet sein, um selbst als Verschluss- oder Lockring der Bremsscheibe zu dienen und dadurch den üblichen Verschluss- oder Lockring zu ersetzen. Das Pulsrad ist dazu vorzugsweise mit einer internal Centerlock-Befestigung oder einer external Centerlock-Befestigung (Verzahnung) sowie dem zur Nabe passenden Gewinde ausgebildet, an der das übliche Werkzeug des Verschlussrings angesetzt werden kann, um das Pulsrad in das entsprechende Gegengewinde an der Nabe einzuschrauben.

Ferner kann die Messeinrichtung, die ausgebildet ist, um den Wechsel zwischen Bereichen mit dem ersten Material und Bereichen mit dem zweiten Material zu detektieren beziehungsweise die Anwesenheit und die Abwesenheit des zweiten Materials zu detektierten, so ausgebildet sein, dass sie selbst derart an dem Fahrrad anbringbar ist, dass sie auf die Fläche des Umfangs des Pulsrades ausgerichtet ist. Eine Anbringung kann hierbei beispielsweise an einer Fahrradgabel oder einer Strebe, wie der Sattelstrebe oder Kettenstrebe, beispielsweise über einen dort vorgesehenen Befestigungspunkt oder eine Schelle erfolgen. Hierbei kann der Hauptkörper der Messeinrichtung ebenfalls zwischen der Bremsscheibe und dem Rahmen platziert sein.

Vorzugsweise weist die Auswertungsschaltung der Messeinrichtung einen Gleichrichter zum Gleichrichten der Spannung des Schwingkreises und einen Kondensator zum Glätten der gleichgerichteten Spannung auf, um eine von der Amplitude des Oszillators/Schwingkreises abhängige Ausgangsspannung bereitzustellen.

Außerdem kann die Auswertungsschaltung der Messeinrichtung einen Komparator aufweisen, der ausgestaltet ist, um in Abhängigkeit von einer Prüfung, ob die Ausgangsspannung des Gleichrichters größer oder kleiner als eine mittlere Spannung des Gleichrichters ist, an einem Ausgang des Komparators ein Signal zur Verfügung zu stellen, welches die Amplitudenänderungen des Oszillators/Schwingkreises darstellt. Dies kann in Form eines Hochpassen realisiert werden.

Schließlich kann die Auswertungsschaltung der Messeinrichtung einen Stromregler aufweisen, der ausgestaltet ist, um den Stromverbrauch der Auswertungsschaltung abhängig vom Signal am Ausgang des Komparators zu steuern, wobei der Stromregler insbesondere einen über den Komparatorausgang gesteuerten Schalter aufweist, der einen zusätzlichen Stromfluss über einen Lastwiderstand schaltet, so dass anhand des Stromverbrauchswechsels der Auswertungsschaltung die Geschwindigkeit ermittelt werden kann.

Die Erfindung wird nachfolgend anhand von Ausführungsbeispielen und schematischen Zeichnungen näher erläutert. In diesen Zeichnungen zeigen:
- Fig. 1: einen stark schematisierten hinteren Bereich eines Fahrrades;
- Fig. 2: eine Vergrößerung des zentralen Bereiches aus Fig. 1 um die Nabe;
- Fig. 3 bis 5: unterschiedliche Ausführungen eines erfindungsgemäßen Pulsrades;
- Fig. 6: eine stark schematisierte Darstellung der Komponenten des Systems und deren positionelle Zuordnung im angebauten Zustand;
- Fig. 7: ein schematisiertes Schaltbild eines Teils der Messeinrichtung mit Oszillator und Gleichrichter;
- Fig. 8: ein schematisiertes Schaltbild eines Komparators der Messeinrichtung; und
- Fig. 9: ein schematisiertes Schaltbild eines Stromreglers der Messeinrichtung.

In Fig. 1 ist der stark vereinfachte hintere Bereich eines Fahrrades gezeigt, das als Beispiel stellvertretend für Fahrzeuge angeführt wird, die durch Körperkraft oder elektromotorisch angetrieben sind, bei denen auf Basis einer Umdrehungs- oder Rotationsmessung eines Rades des Fahrzeugs mit einem System umfassend ein Pulsrad und eine Messeinrichtung die Geschwindigkeit des Fahrzeugs ermittelt wird, und die neben Fahrrädern als die typischste Gruppe auch, Scooter, Rollstühle, Roller oder dgl. Umfassen.

Der hier dargestellte Fahrradrahmen 11 besteht im Wesentlichen aus einem Sattelrohr 12 und stark schematisierten Sattel-13 und Kettenstreben 14, wobei jeweils der zweite Teil der Streben aus Übersichtlichkeitsgründen weggelassen wurde. Die Kettenstreben 14 werden auch als Unterstrebe bezeichnet.

Am Fahrradrahmen 11 ist ein Rad mit seiner Nabe 21 befestigt, wobei aus Gründen der Übersichtlichkeit weitere Bauteile des Rades, wie Felgen, Speichen, Karkasse oder Reifen, nicht dargestellt sind. An der Nabe 21 ist eine Bremsscheibe 23 befestigt.

Zwischen der Bremsscheibe 23 und dem Fahrradrahmen 11 ist ein erfindungsgemä-ßes Pulsrad 1 vorgesehen. Dieses ist in der hier gezeigten Ausführungsform aus zwei unterschiedlichen Materialien aufgebaut. Als Hauptmaterial kann ein Material verwendet werden, welches keinen Einfluss auf eine dem Pulsrad zugeordnete Messeinrichtung 40 hat, die zum Detektieren der Umdrehungen des Pulsrades 1 verwendet wird.

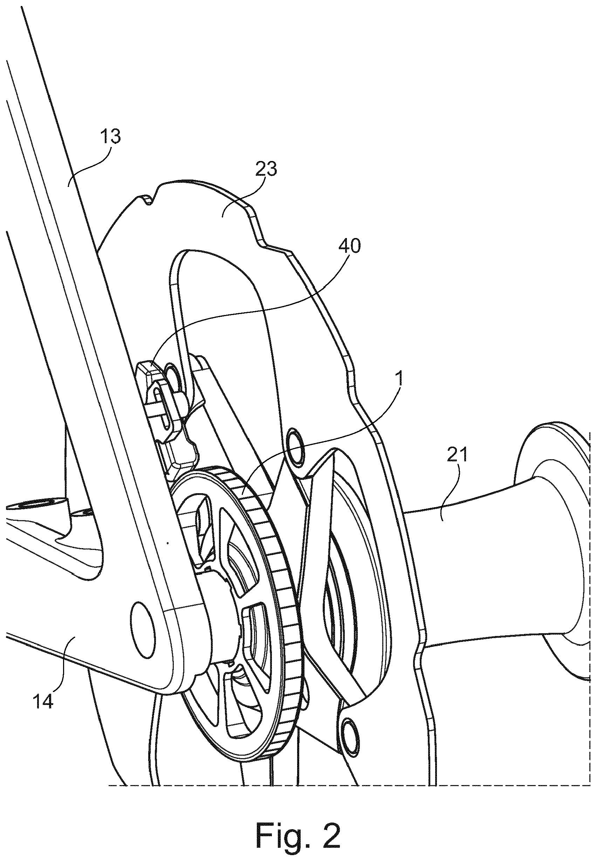

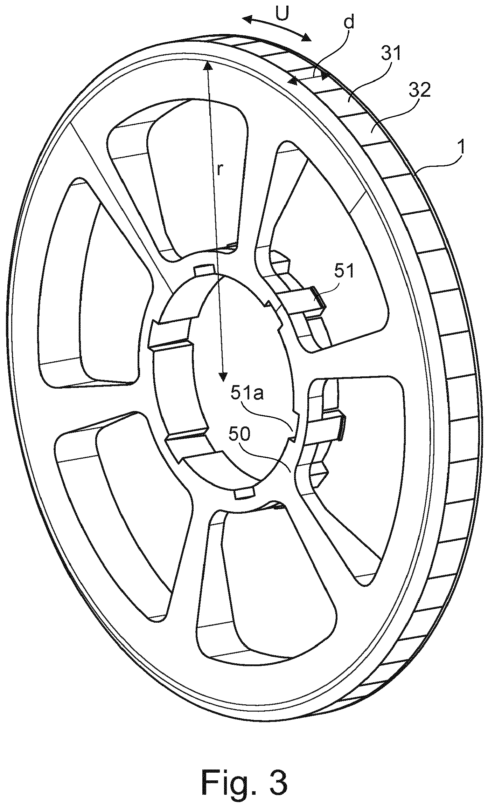

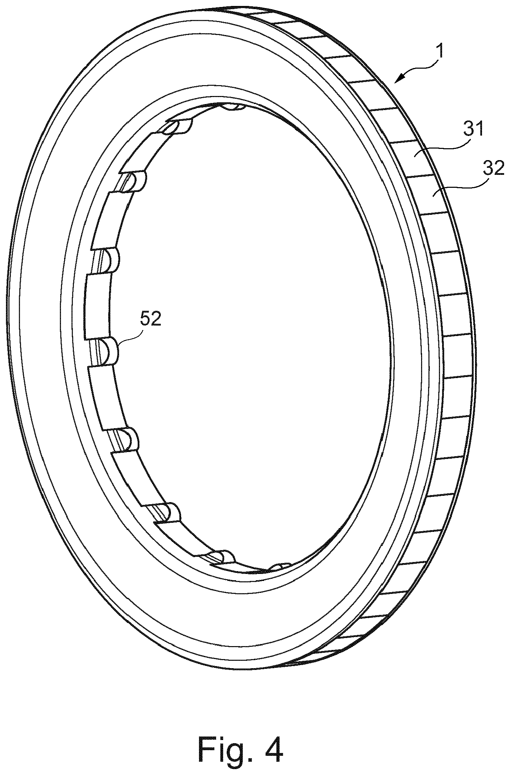

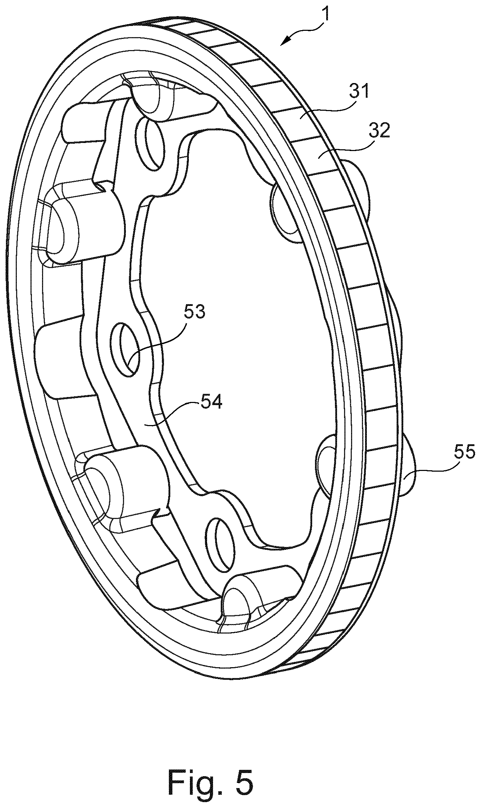

Das in den Figuren 1 und 2 gezeigte Pulsrad 1 ist in Fig. 3 separat dargestellt. Alternative Ausführungen für Pulsräder 1 sind in den Figuren 4 und 5 gezeigt.

Das Pulsrad 1 ist rad- oder scheibenartig ausgebildet und weist einen Umfang U auf, der eine Breite d hat. Auf der Umfangsfläche sind zwei unterschiedliche Materialien 31, 32 angeordnet. Bei dem Material 31 kann es sich auch um das Hauptmaterial des Pulsrades 1 handeln. Das Material 32 wird bevorzugt so gewählt, dass es einen Einfluss auf die Messeinrichtung 40 ausübt, wohin gegen das Material 31 bevorzugt, gewählt wird, dass es keinen oder keinen wesentlichen Einfluss ausübt.

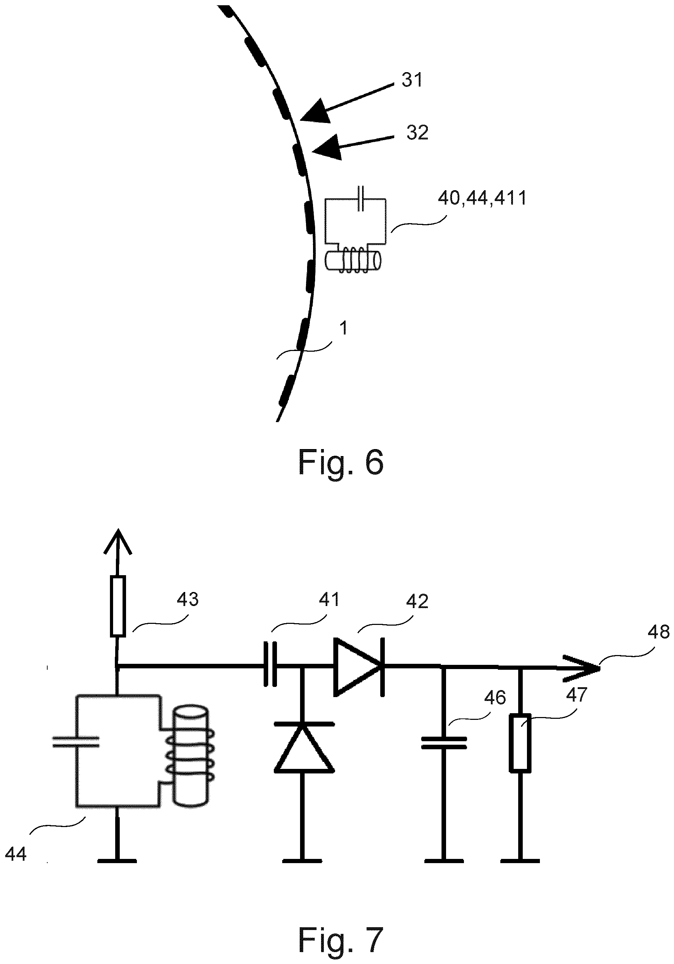

Anders ausgedrückt wird das Material 32 so ausgewählt, dass es elektrisch leitfähig ist, beispielsweise ein Metall, ein elektrisch leitfähiger Kunststoff oder ein ferromagnetisches Material, so dass dessen Vorhandensein in einem Erfassungs- bzw. Einflußbereich von der Messeinrichtung 40 detektiert werden kann. Die Messeinrichtung 40 wird in der Nähe des Pulsrades 1 moniert, so dass bei Drehung des Pulsrades abwechselnd das erste und das zweite Material in der Nähe der Messeinrichtung bzw. von dessen Messzone (konkret in dem Magnetfeld der Spule des später noch beschriebenen LC Schwingkreises) sind (siehe auch Fig. 6). Der Abstand kann dabei im Bereich von 1,5mm liegen.

Das Messprinzip der Messeinrichtung 40 basiert dafür auf einem Oszillator, der einen Schwingkreis 44 mit einer Spule und einem Kondensator anregt. Dieses erzeugt ein hochfrequentes elektromagnetisches Wechselfeld, das aus der aktiven Fläche des Sensors austritt. Wenn sich das elektrisch leitfähige Objekt in dieses Magnetfeld bewegt, werden in dem Objekt Wirbelströme induziert. Diese Wirbelströme entziehen dem Schwingkreis Energie, was zu einer Dämpfung der Schwingungsamplitude führt. Diese Änderung der Schwingungsamplitude wird von einer Elektronik im Sensor erfasst und ausgewertet. Bei digitalen Sensoren kann daraus ein Schaltsignal erzeugt werden, bei analogen Sensoren ein Ausgangssignal, das proportional zur Objektentfernung ist. Durch die Messung der Änderung der Schwingungsamplitude kann somit die Geschwindigkeit eines sich bewegenden Objekts erfasst werden. Je schneller sich das Objekt bewegt, desto größer ist die Änderung der Schwingungsamplitude und desto höher ist das Ausgangssignal des Sensors. Grundsätzlich ist es für die Erfindung vorteilhaft, wenn die beiden Materialen 31, 32 unterschiedlich sind und damit die Messeinreichung 40 unterschiedlich beeinflussen oder dort unterschiedliche Signale erzeugen. Hierdurch kann erkannt oder analysiert werden, ob sich gerade ein Bereich mit dem ersten 31 oder zweiten Material 32 gegenüber der Messeinreichung 40 befindet bzw. diese passiert.

Wie insbesondere in Fig. 2 ersichtlich ist, ist die Messeinrichtung 40 ebenfalls am Fahrradrahmen 11, in diesem Fall an der Sattelstrebe 13, befestigt. Sie kann aber grundsätzlich auch an der Kettenstrebe 14 oder einer anderen Stelle vorgesehen sein.

Die Messeinrichtung 40 ist so ausgelegt, dass sie im angebauten Zustand gegenüber der Umfangsfläche des Pulsrades 1 platziert ist. Anders ausgedrückt ist die Sensorfläche oder der Sensorbereich der Messeinrichtung 40 gegenüberliegend der Umfangsoberfläche des Pulsrades 1 vorgesehen.

Wie insbesondere aus Fig. 2 zu entnehmen ist, kann durch eine derartige Kombination des erfindungsgemäßen Pulsrades 1 mit der Platzierung der Messeinrichtung 40 eine platzsparende Positionierung erreicht werden, die auch gegenüber der Umgebung durch den Rahmen relativ gut abgeschirmt und gegenüber Beschädigungen geschützt ist.

In den Figuren 3, 4 und 5 sind verschiedene Ausführungen eines erfindungsgemäßen Pulsrades 1 für unterschiedliche Befestigungstypen vorgesehen. Die Ausführung nach Fig. 3 eignet sich für eine interne Center-Lock-Befestigung, die Ausführung nach Fig. 4 für eine externe Center-Lock-Befestigung. Fig. 5 ist für eine Befestigung an der Bremsscheibe 23 mit sechs Schrauben vorgesehen. Wesentlich für die Erfindung ist hierbei nicht die exakte Form des Pulsrades, sondern, dass sich auf dessen Umfangsbereich Areale mit unterschiedlichen Materialien abwechseln.

Genauer gesagt besitzt das Pulsrad im Zentrum des radial inneren Bereichs ein Loch, durch das sich im angebauten Zustand die Nabe bzw. ein Teil derselben und die Achse des Rades erstreckt. Das Loch bildet das Zentrum eines Befestigungsrings 50, an dem auf einer axial der Nabe zugewandten Seite und auf einem radial nach Außen gerichteten Flansch eine Verzahnung 51 ausgebildet ist, die beim Beispiel der Fig. 3 einer internen Center-Lock-Befestigung entspricht bzw. in eine solche eingepasst werden kann. Auf diese Weise kann das Pulsrad auf einen entsprechenden Verschluss- oder Lockring der Bremsscheibe, der an der Nabe montiert ist, um die Bremsscheibe zu fixieren, aufgesteckt und mit diesem formschlüssig drehfest zur Nabe verbunden werden. An der radial nach innen weisenden Seite des Befestigungsrings 50 ist eine entsprechende Verzahnung 51a für eine interne Center-Lock-Befestigung ausgebildet, die in axialer Richtung von der einen axialen Seite zur gegenüberliegenden axialen Seite hindurchgeht.

Das in Figur 4 gezeigte Beispiel ist demgegenüber für eine externe Center-Lock-Befestigung geeignet und besitzt entsprechend ein größeres Loch und eine an dessen Umfang eine radial nach innen gerichtete und zu der externen Center-Lock-Befestigung passende Verzahnung 52, die auf den entsprechenden Verschluss- oder Lockring der Bremsscheibe dieses Typs aufgesetzt und formschlüssig drehfest zur Nabe damit verbunden werden kann.

In der in Figur 5 gezeigten Variante ist das Pulsrad mit 6 Durchgangslöchern 53 versehen, die um das Mittelloch verteilt an einem radialen Flansch 54 so angeordnet sind, dass sie mit einer üblichen 6-bolt Aufnahme für die Bremsscheibe an einer Nabe fluchten. Der radiale Flansch ist in der axialen Richtung zur Seite der Nabe hin versetzt und bildet einen Freiraum zur Aufnahme der Köpfe der Befestigungsbolzen und weist an der der Nabe zugewandten Seite Abstandhalter 55 auf, die im angebauten Zustand die Bremsscheibe auf der Nabe fixieren.

In einer nicht dargestellten Variante kann das Pulsrad 1 auch ausgebildet sein, um selbst als Verschluss- oder Lockring der Bremsscheibe 23 zu dienen und einen solchen als separates Bauteil zu ersetzen. Das Pulsrad ist in diesem Fall in an sich bekannter Weise wie der Verschluss- oder Lockring mit einem Gewinde versehen, das in das entsprechende Gegengewinde an der Nabe eingeschraubt werden kann, mit einem Vorsprung, der im eingeschraubten Zustand die Bremsscheibe fixiert, und mit einer internal Centerlock-Befestigung oder einer external Centerlock-Befestigung, an der das entsprechende Werkzeug zum Ein- oder Ausschrauben des Pulsrades angesetzt werden kann.

Grundsätzlich kann die Befestigung des Pulsrades 1 jedoch auch anders ausgeführt sein. Wesentlich ist hierbei, dass des Pulsrad 1 drehfest an der Nabe 21 beziehungsweise indirekt über die Bremsscheibe 23 an der Nabe 21 befestigt ist, so dass zuverlässig eine Rotation der Nabe 21 und damit des Rades auf das Pulsrad 1 übertragen werden kann. Die Messeinrichtung 40 umfasst einen Oszillator, der einen LC Schwingkreis 44 mit einer nicht abgeschirmten Spule, deren Magnetfeld aus dem Spulenkörper hinausdringt bis in den Bereich des Pulsrades 1 mit den alternierend angeordneten Bereichen aus erstem und zweitem Material, und einem Kondensator. Das in der Nähe der Spule befindliche zweite (elektrisch leitfähige) Material 32 beeinflusst die Dämpfung der Spule. Mit diesen Änderungen im Spulenumfeld verändert sich die Amplitude der Schwingung des LC Schwingkreises 44.

Die Auswertungsschaltung 411 der Messeinrichtung 40 umfasst ferner einen Vorwiderstand 43 zu dem LC Schwingkreis 44 und einen Gleichrichter 42 zum Gleichrichten der Spannung des LC Schwingkreises 44 und einen Kondensator 46 zum Glätten der gleichgerichteten Spannung, um eine von der Amplitude des Spannung des Schwingkreises abhängige Ausgangsspannung bereitzustellen. Konkret wird die Spannung des LC Schwingkreises 44 mit einem Kondensator 41 entkoppelt und auf den Gleichrichter 42 gegeben.

Konkret wird mit Bezug auf Fig. 7 die gleichgerichtete Spannung mit dem Kondensator 46 geglättet. Der Ausgang des Gleichrichters wird mit einem Widerstand 47 belastet. Der Strom über den Kondensator 41 ist abhängig von Frequenz und Amplitude des LC Schwingkreises. Nach dem Gleichrichter steht am Ausgang 48 eine Spannung zur Verfügung, die abhängig von Frequenz und Amplitude des LC Schwingkreises 44 ist. Erfindungsgemäß wird die Amplitude bzw. deren Änderung ausgewertet.

Die Auswertungsschaltung 411 der Messeinrichtung 40 umfasst ferner vorzugsweise einen Komparator 45, der ausgestaltet ist, um in Abhängigkeit von einer Prüfung, ob die Ausgangsspannung des Gleichrichters 42 größer oder kleiner als eine mittlere Spannung des Gleichrichters 42 ist (Hochpass), an einem Ausgang des Komparators 49 ein Signal zur Verfügung zu stellen, welches die Amplitudenänderungen des Oszillators/Schwingkreises 44 darstellt.

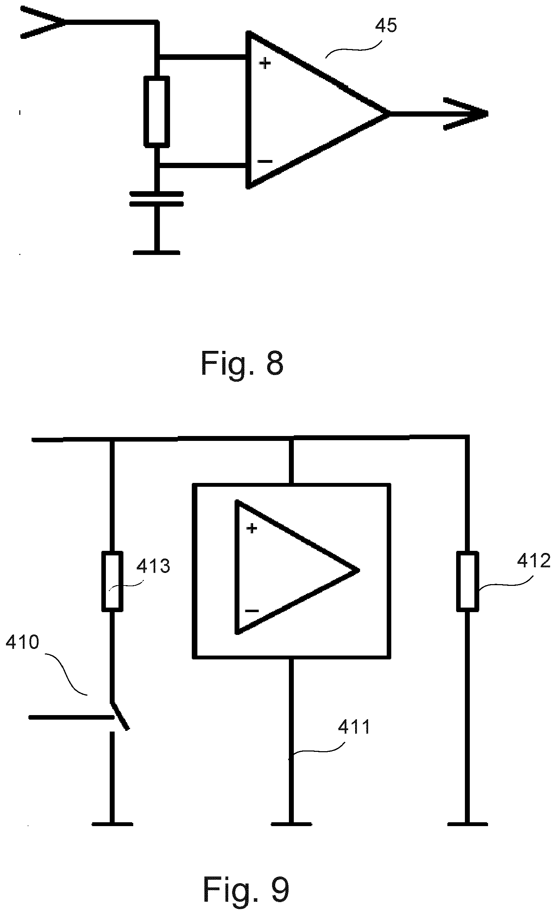

Konkret wird mit Bezug auf Fig. 8 mit dem Komparator 45 geprüft, ob die Ausgangsspannung des Gleichrichters 42 größer oder kleiner als die mittlere Spannung des Gleichrichters ist (Hochpass). Im eingeschwungenen Zustand hat sich der Kondensator des Komparators 45 auf die mittlere Spannung des Gleichrichters aufgeladen. Am Ausgang des Komparators steht ein Signal zur Verfügung, welches die Frequenz- / Amplitudenänderungen des LC-Oszillators 44 darstellt.

Die Auswertungsschaltung 411 der Messeinrichtung 40 umfasst ferner vorzugsweise einen Stromregler, der ausgestaltet ist, um den Stromverbrauch der Auswertungsschaltung 411 abhängig vom Signal am Ausgang des Komparators 49 zu steuern, wobei der Stromregler insbesondere einen über den Komparatorausgang gesteuerten Schalter 410 aufweist, der einen zusätzlichen Stromfluss über einen Lastwiderstand 413 schaltet, so dass anhand des Stromverbrauchswechsels der Auswertungsschaltung die Geschwindigkeit ermittelt werden kann.

Konkret wird mit Bezug auf Fig. 9 der Stromverbrauch der Schaltung abhängig vom Sensorsignal gesteuert. Der minimale Stromverbrauch setzt sich zusammen aus dem Stromverbrauch der elektronischen Schaltung 411 und einem Lastwiderstand 412. Der minimale Stromverbrauch wird über die Dimensionierung des Lastwiderstandes 412 eingestellt. Der Komparatorausgang steuert über einen Schalter 410 einen zusätzlichen Strom über einen zweiten Lastwiderstand 413. Mit der Dimensionierung des zweiten Lastwiderstandes 413 kann der maximale Stromverbrauch eingestellt werden. Für das Fahrzeug (z.B. Fahrrad) bei welchem dieses System genutzt wird, kann anhand der Stromverbrauchswechsel auf die Geschwindigkeit geschlossen werden.

## Patentansprüche

1. System zur Bestimmung der Geschwindigkeit eines Fahrzeugs auf Basis einer Umdrehungsmessung eines Rades des Fahrzeugs, wobei das Rad eine an einem Rahmen (11) des Fahrzeugs fixierbare Radachse und eine daran drehbare Nabe (21) und vorzugsweise eine mit der Nabe (21) fest verbundene Bremsscheibe (23) aufweist,
wobei das System ein Pulsrad (1), das im Einbauzustand drehfest zur Nabe (21) angebracht ist, und eine dem Pulsrad (1) im Einbauzustand zugeordnete Messeinrichtung (40) zum Ermitteln der Umdrehungen des Pulsrades (1) aufweist,
wobei das Pulsrad (1) zwei unterschiedliche Materialen (31,32) aufweist, wobei ein erstes Material (31) ausgelegt ist, um keinen Einfluss auf die Messeinrichtung (40) auszuüben, und wobei ein zweites Material (32) ein elektrisch leitfähiges Material ist, um Einfluss auf die Messeinrichtung (40) auszuüben, und wobei das Pulsrad (1) rad- oder scheibenartig, mit einer Breite (d), einem Radius (r) und einem Umfang (U), ausgebildet ist, wobei auf dem Umfang (U) Bereiche mit dem ersten Material (31) und Bereiche mit dem zweiten Material (32) jeweils alternierend zueinander angeordnet sind,
**dadurch gekennzeichnet ,**
**dass** die Messeinrichtung (40) einen Oszillator, der einen Schwingkreis (44) mit einer Spule und einem Kondensator anregt, dessen Schwingkreisamplitude durch die Bewegung des zweiten Materials (32) in das elektromagnetische Wechselfeld der Spule gedämpft wird, und eine Auswertungsschaltung (411) aufweist, die konfiguriert ist, um die dadurch erzeugte Änderung der Schwingungsamplitude der Spannung des Schwingkreises auszuwerten und die Umdrehungen des Pulsrades (1) zu ermitteln.

2. System nach Anspruch 1,
**dadurch gekennzeichnet ,**
**dass** das erste Material (31) des Pulsrades (1) ein elektrisch nicht-leitfähiges Material ist.

3. System nach Anspruche 1 oder 2,
**dadurch gekennzeichnet ,**
**dass** das zweite Material (32) ein ferromagnetisches Material ist.

4. System nach einem der Ansprüche 1 bis 3,
**dadurch gekennzeichnet ,**
**dass** die Bereiche mit dem ersten Material (31) und die Bereiche mit dem zweiten Material (32) auf dem Umfang (U) des Pulsrades (1) im Wesentlichen jeweils gleich groß sind.

5. System nach einem der Ansprüche 1 bis 4,
**dadurch gekennzeichnet ,**
**dass** die Bereiche mit dem ersten Material (31) und die Bereiche mit dem zweiten Material (32) auf dem Umfang (U) des Pulsrades (1) gleich bzw. regelmäßig oder unregelmäßig verteilt sind.

6. System nach einem der Ansprüche 1 bis 5,
**dadurch gekennzeichnet ,**
**dass** auf dem Umfang (U) des Pulsrades (1) mindestens je 20 Bereiche mit dem ersten (31) und dem zweiten Material (32) angeordnet sind.

7. System nach einem der Ansprüche 1 bis 6,
**dadurch gekennzeichnet ,**
**dass** ein radial innerer Bereich des Pulsrades (1) hauptsächlich aus dem ersten Material (31) besteht.

8. System nach einem der Ansprüche 1 bis 7,
**dadurch gekennzeichnet ,**
**dass** ein Hauptkörper des Pulsrades (1) durch ein Spritzgussverfahren hergestellt ist, wobei die Bereiche für das zweite Material (32) als Vertiefungen auf dem Umfang vorgesehen sind und
**dass** das zweite Material (32) in diese Vertiefungen eingelegt, insbesondere eingeklebt, ist.

9. Pulsrad (1) nach einem der Ansprüche 1 bis 8,
**dadurch gekennzeichnet ,**
**dass** das Pulsrad (1) einen Durchmesser aufweist, der mindestens doppelt so groß wie der Durchmesser der Nabe (21) ist und/oder einen Durchmesser aufweist, der kleiner, insbesondere halb so klein, wie der Durchmesser der Bremsscheibe (23) ist.

10. System nach einem der Ansprüche 1 bis 9,
wobei die Messeinrichtung (40) ausgebildet ist, um im angebauten Zustand auf die Fläche des Umfangs (U) des Pulsrades (1) ausgerichtet zu werden.

11. System nach einem der Ansprüche 1 bis 10,
**dadurch gekennzeichnet ,**
**dass** das Pulsrad (1) ausgebildet ist, um indirekt drehfest an der Nabe (21) durch formschlüssigen Eingriff mit einer Verzahnung einer internal Centerlock-Befestigung oder einer external Centerlock-Befestigung eines Verschluss- oder Lockrings der Bremsscheibe (23) befestigt zu werden, so dass das Pulsrad (1) im angebauten Zustand zwischen der Bremsscheibe (23) und dem Fahrradrahmen (11) drehfest zur Nabe (21) angebracht ist, oder
**dass** das Pulsrad (1) ausgebildet ist, um als Verschluss- oder Lockring der Bremsscheibe (23) zu dienen und mit einer internal Centerlock-Befestigung oder einer external Centerlock-Befestigung ausgebildet ist.

12. System nach einem der Ansprüche 1 bis 11,
**dadurch gekennzeichnet ,**
**dass** die Auswertungsschaltung (411) der Messeinrichtung (40) einen Gleichrichter (42) zum Gleichrichten der Spannung des Schwingkreises (44) und einen Kondensator (46) zum Glätten der gleichgerichteten Spannung aufweist, um eine von der Amplitude der Spannung des Schwingkreises abhängige Ausgangsspannung bereitzustellen.

13. System nach Anspruch 12,
**dadurch gekennzeichnet ,**
**dass** die Auswertungsschaltung (411) der Messeinrichtung (40) einen Komparator (45) aufweist, der ausgestaltet ist, um in Abhängigkeit von einer Prüfung, ob die Ausgangsspannung des Gleichrichters (42) größer oder kleiner als eine mittlere Spannung des Gleichrichters (42) ist, an einem Ausgang des Komparators (49) ein Signal zur Verfügung zu stellen, welches die Amplitudenänderungen der Spannung des Schwingkreises (44) darstellt.

14. System nach Anspruch 12,
**dadurch gekennzeichnet ,**
**dass** die Auswertungsschaltung (411) der Messeinrichtung (40) einen Stromregler aufweist, der ausgestaltet ist, um den Stromverbrauch der Auswertungsschaltung (411) abhängig vom Signal am Ausgang des Komparators (49) zu steuern, wobei der Stromregler insbesondere einen über den Komparatorausgang gesteuerten Schalter (410) aufweist, der einen zusätzlichen Stromfluss über einen Lastwiderstand (413) schaltet, so dass anhand des Stromverbrauchswechsels der Auswertungsschaltung die Geschwindigkeit ermittelt werden kann.
